**Europäisches Patentamt**

**European Patent Office**

**Office européen des brevets**

(19)

(11) Veröffentlichungsnummer: **0 100 062**
**A2**

(12) **EUROPÄISCHE PATENTANMELDUNG**

(21) Anmeldenummer: **83107102.2**

(22) Anmeldetag: **20.07.83**

(51) Int. Cl.³: **F 16 K 19/00**

(30) Priorität: **24.07.82 DE 3227788**

(43) Veröffentlichungstag der Anmeldung: **08.02.84**
**Patentblatt 84/6**

(84) Benannte Vertragsstaaten: **AT BE CH DE FR GB IT LI NL SE**

(71) Anmelder: **FRIEDRICH GROHE ARMATURENFABRIK GmbH & CO, Hauptstrasse 137, D-5870 Hemer (DE)**

(72) Erfinder: **Kostorz, Jan Ryszard, Freiherr-von-Dücker Strasse 2a, D-5750 Menden 2 (DE)**

(54) **Eingriffmischventil.**

(57) Bei einem Eingriffmischventil für Warm- und Kaltwasser mit einem Hohlkolben, der in einer im wesentlichen zylindrischen, mit Dichtungen versehenen Hülse gelagert ist, wobei die Hülse mit dem Hohlkolben eine Baueinheit oder Kartusche bilden, die im Ventilgehäuse einfügbar ist, und die Zu- und Abflüsse bei der Baueinheit radial erfolgen, ist für den Einsatz dieser Ventilkartusche bei Mischventilen, die von einem drucklosen Warmwasserbereiter mit Warmwasser versorgt werden, vorgesehen, daß im Ventilgehäuse ein Kanal für den Kaltwasserzufluß ausgebildet ist, der in jeder Ventilbetriebsstellung mit einer im Hohlkolben ausgebildeten Verteilkammer verbunden ist und axial versetzt zum Zufluß die Verteilkammer mit einer oder mehreren Abflußöffnungen versehen ist, mit denen einerseits eine Verbindung zu einem Kanal für den Kaltwasserzufluß eines Warmwasserspeichers und anderseits zu einem Kanal für die Wassermischung herstellbar ist, in den ebenfalls eine Warmwasserrückführleitung des Speichers geführt ist, wobei durch eine axiale Kolbenverschiebung die gesamte Durchflußmenge und durch eine Kolbenverdrehung das Verhältnis von Teilströmen für die Wassermischung bestimmbar ist.

0100062

Friedrich Grohe Armaturenfabrik GmbH & Co.
GRP - 485 EP

# Eingriffmischventil

Die Erfindung betrifft ein Eingriffmischventil mit den im Oberbegriff des Anspruchs 1 angegebenen Merkmalen. Ein Mischventil dieser Gattung ist in der Druckschrift DE-OS 27 31 809 gezeigt. Bei diesem bekannten Mischventil sind die wesentlichen Ventilelemente als geschlossene Baueinheit (Kartusche) ausgebildet, die als Bausatz direkt in eine Sackbohrung des Ventilgehäuses einbringbar und verriegelbar ist. Die Baueinheit kann daher in den verschiedensten Sanitärarmaturen eingesetzt werden, wobei es jedoch erforderlich ist, daß je eine Druckwasserleitung für warmes und kaltes Wasser vorhanden ist. Bei sogenannten drucklosen Warmwasserbereitern bzw. Warmwasser-Überlaufspeichern kann das Mischventil nicht eingesetzt werden.

Der Erfindung liegt daher die Aufgabe zugrunde, ein Eingriffmischventil für den Betrieb mit einem Warmwasser-Überlaufspeicher zu schaffen, bei dem die eingangs aufgeführte Ventilbaueinheit bzw. Ventilkartusche unverändert eingesetzt werden kann.

Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 4 angegeben.

Die mit der Erfindung erzielbaren Vorteile bestehen insbesondere darin, daß die in hoher Stückzahl hergestellte Ventilkartusche neben dem bisherigen Einsatz in verschiedenen Sanitärarmaturen nunmehr auch in Mischventilen verwendet werden kann, die von einem Warmwasser-Überlaufspeicher mit Warmwasser versorgt werden.

Ein Ausführungsbeispiel der Erfindung ist in der Zeichnung dargestellt und wird im folgenden näher erläutert. Es zeigt

        Figur 1    ein teilweise in der Ebene I der
                   Figur 3 geschnittenes Eingriffmischventil;

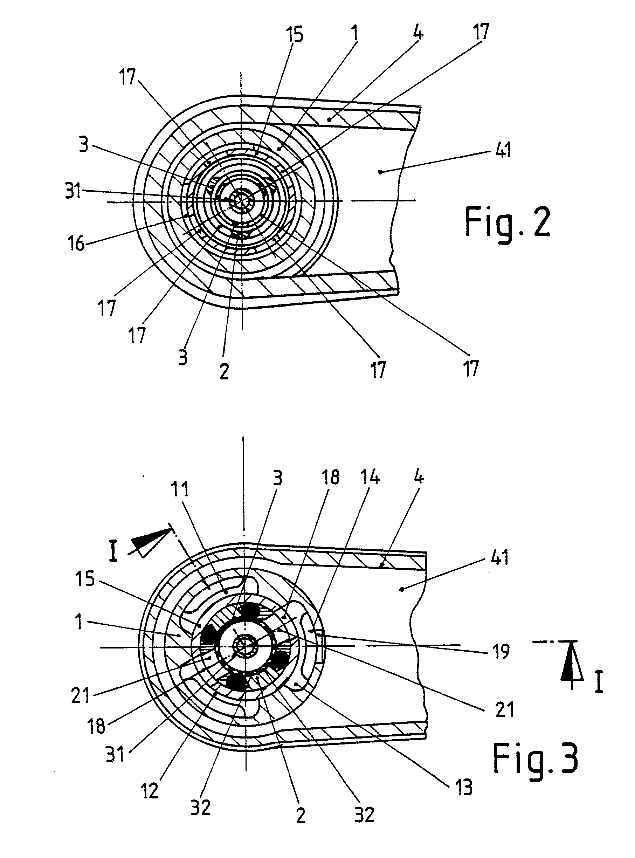

        Figur 2    das Eingriffmischventil gemäß

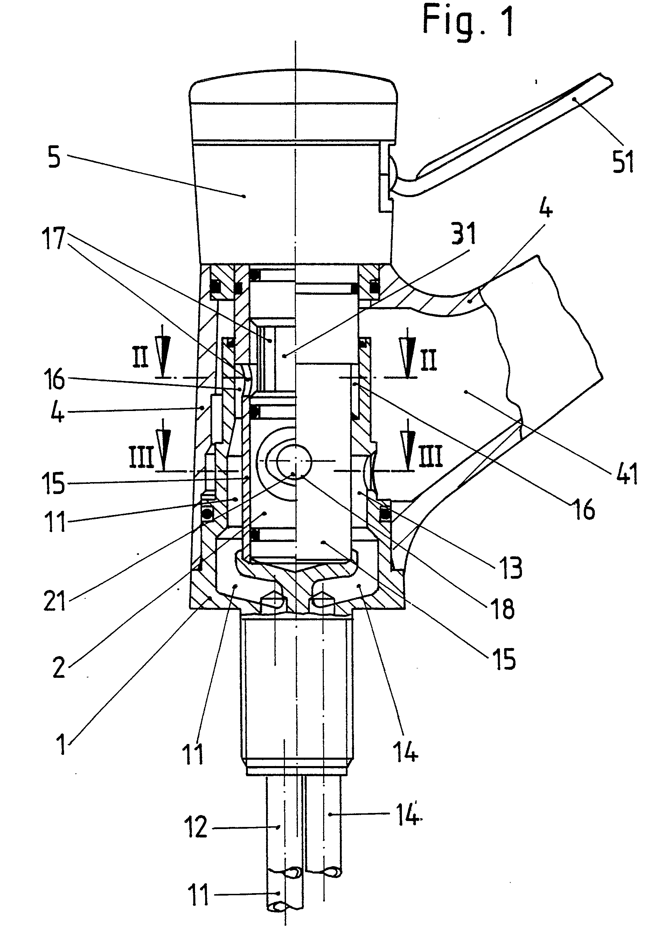

                   Figur 1 in der Schnittebene II;

        Figur 3    das Eingriffmischventil gemäß
                   Figur 1 in der Schnittebene III.

Bei dem in den Figuren 1 bis 3 gezeigten Eingriffmischventil ist eine in der Druckschrift DE-OS 27 31 809 beschriebene Ventilkartusche eingesetzt. Die Ventilkartusche besteht im wesentlichen aus einer die Dichtmittel tragenden Hülse 2 und einem in der Hülse dreh- und axialbeweglich gelagerten Hohlkolben 3. Die Hülse 2 ist dabei in einer im Ventilgehäuse 1 eingelöteten Buchse 15 aufgenommen und mit bekannten Mitteln in der Stecklage verriegelt. An dem Ventilgehäuse ist außerdem ein Hebelkopf 5 mit einem radial herausgeführten Handhebel 51 zur Einleitung der Stellgröße in den Hohlkolben 3 sowie eine Wasserauslaufarmatur 4 mit einem Mischwasserauslauf 41 für die Abgabe des erzeugten Mischwassers ausgebildet.

In dem Ventilgehäuse 1 ist ein Kanal 11 für den Kaltwasserzufluß angeordnet, der einerseits mit dem Kaltwasserversorgungsnetz verbunden ist und andererseits in einen Ringkanal 16 einmündet und von hier durch Radialöffnungen 17 in der Buchse 15 der Hülse 2 und des Hohlkolbens 3 mit einer in dem Hohlkolben ausgebildeten Verteilkammer 31 verbunden. Axial versetzt zu den Radialöffnungen 17 in dem Hohlkolben 3 sind Abflußöffnungen 32 in Form von Schlitzen in der Wandung des Hohlkolbens 3 in zwei Reihen über etwa zwei Drittel des Kolbenumfangs ausgebildet. In diesem Bereich, wie insbesondere der Figur 3 zu entnehmen ist, sind in der Hülse 2 zwei diametral zueinander angeordnete Abflußöffnungen 21 ausgebildet, wobei in diesen Abflußöffnungen auf einem felgenartigen Stützkörper aufgeknöpfte Dichtungen gehaltert sind, die eine Abdichtung zwischen der Buchse 15 und der Wandung des Hohlkolbens 3 bewirken. Entsprechend zu den Abflußöffnungen 21 sind in der Buchse 15 Öffnungen 18 für den Abfluß ausgebildet und stellen jeweils eine Verbindung zu den beiden Kanälen 12 und 13 im Ventilgehäuse 1 her. Der Kanal 12 steht mit einer Kaltwasserzuflußleitung für einen Warmwasser-Überlaufspeicher in Verbindung, der seinerseits mit einer Warmwasserrückführleitung 14 mit dem Ventilgehäuse verbunden ist und das vom Kaltwasser verdrängte Warmwasser in den Kanal 13 für die Wassermischung dem direkt zu-

.../4

geführten Kaltwasser beimischt.

Das Mischventil hat folgende Wirkungsweise:
Das vom Versorgungsnetz abgegebene Kaltwasser gelangt über den Kanal 11 in den Ringkanal 16 und von hier durch die Radialöffnungen 17 in die vom Hohlkolben 3 gebildete Verteilkammer 31. Wird nun der Handhebel 51 auf- oder abbewegt, so erfährt der Hohlkolben 3 eine Axialverschiebung und die Abflußöffnungen 32 in der Wandung des Hohlkolbens 3 gelangen mehr oder weniger in den Bereich der Abflußöffnungen 21 der Hülse 2, so daß entsprechend dem Stellgrad ein Öffnungsquerschnitt zu den Kanälen 12 und 13 freigegeben wird. Durch eine Axialbewegung des Hohlkolbens kann somit die Gesamtdurchflußmenge bzw. die Absperrung des Mischventils bewirkt werden.
Wird dagegen der Hebelkopf 5 mit dem Handhebel 51 um die Mittelachse verschwenkt, so erfährt der Hohlkolben 3 eine entsprechende Drehstellung, wobei mit den Abflußöffnungen 32 in gegensinniger Weise, d.h.eine Zunahme des Öffnungsquerschnittes an der einen Seite bewirkt eine entsprechende Verminderung des Öffnungsquerschnittes an der anderen Seite,entsprechend zur Drehstellung bestimmte Teilströme von Kaltwasser erzeugt werden. Der in den Kanal 12 abgegebene Kaltwasserteilstrom wird dem Warmwasser-Überlaufspeicher zugeführt und eine entsprechend verdrängte Warmwassermenge über die Warmwasserrückführleitung 14 vom Speicher in das Ventilgehäuse 1 eingeleitet. Das vom Speicher abgegebene Warmwasser wird nunmehr in den Kanal 13 eingespeist, wobei es sich mit dem anderen Teilstrom von Kaltwasser vermischt und somit temperiertes Mischwasser erzeugt wird. Zur guten Vermischung von Kalt- und Warmwasser werden zweckmäßig die Einleitungen von Kalt- und Warmwasser versetzt zu der Mischwasserabflußöffnung 19 im Kanal 13 angeordnet.

Anstatt des besonders im Ventilgehäuse 1 ausgebildeten Kanals 13 für die Mischwassererzeugung kann auch der
Mischwasserauslauf 41 der Wasserauslaufarmatur 4 zur
Vermischung der separat vom Ventilgehäuse abgegebenen
Teilströme von Kalt- und Warmwasser dienen.

0100062

Friedrich Grohe Armaturenfabrik GmbH & Co.
GRP - 485

ANSPRÜCHE

1. Eingriffmischventil für Warm- und Kaltwasser mit einem Hohlkolben, mit dem mittels Drehung das Mischungsverhältnis und durch axiale Verschiebung die Durchlaufmenge einstellbar ist, wobei der Hohlkolben in einer im wesentlichen zylindrischen, in das Ventilgehäuse einschiebbaren, mit Dichtungen versehenen Hülse gelagert ist und die Zu- und Abflüsse radial am Hohlkolben erfolgen, dadurch gekennzeichnet, daß das Ventilgehäuse (1) einen Kanal (11) für den Kaltwasserzufluß hat, der in jeder Ventilbetriebsstellung mit einer im inneren des Hohlkolbens (3) ausgebildeten Verteilkammer (31) verbunden ist und die Verteilkammer (31) axial versetzt zum Zufluß mit einer oder mehreren Abflußöffnungen (32) versehen ist, mit denen einerseits eine Verbindung zu einem Kanal 12 für den Zufluß eines Warmwasser-Überlaufspeichers und andererseits zu einem Kanal (13) für die Wassermischung herstellbar ist, wobei durch eine axiale Kolbenverschiebung die gesamte Durchflußmenge und in Abhängigkeit von der Kolbendrehstellung das Verhältnis von Teilströmen für die Wassermischung mittels gegensinniger Öffnungscharakteristik bestimmbar ist, und in den Kanal (13) für die Wassermischung eine Warmwasserrückführleitung (14) des Speichers geführt ist.

0100062

2.  Eingriffmischventil nach Anspruch 1, dadurch gekennzeichnet, daß die Kanäle (11,12,13) im wesentlichen etwa parallel und symmetrisch zur Mittelachse des Hohlkolbens (3) in dem Ventilgehäuse (1) ausgebildet und durch eine z.B. eingelötete Buchse (15) voneinander getrennt sind, wobei der Kanal (11) für den Kaltwasserzufluß in einen Ringkanal (16) mündet, der mittels Radialöffnungen (17) in der Buchse (15), der Hülse (2) und dem Hohlkolben (3) mit der Verteilkammer (31) verbunden ist und durch die beiden diametral zueinander in der Hülse (2) angeordneten Abflußöffnungen (32) und anschließenden Öffnungen (18) für die beiden Kaltwasserteilströme in Abhängigkeit von der Kolbenstellung eine direkte Verbindung von der Verteilkammer (31) zu den das Wasser abführenden Kanälen (12,13) herstellbar ist.

3.  Eingriffmischventil nach den Ansprüchen 1 und 2, dadurch gekennzeichnet, daß der Kanal für die Wassermischung gleichzeitig als Auslaufrohr oder Auslaufmundstück einer Wasserauslaufarmatur (4) ausgebildet ist.

4.  Eingriffmischventil nach den Ansprüchen 1 bis 3, dadurch gekennzeichnet, daß die Öffnungen für den Zufluß und die Mischwasserabflußöffnung (19) des gemischten Wassers zueinander versetzt in dem Kanal (13) angeord- net sind.

0100062

## Fig. 1

0100062

Fig. 2

Fig. 3